# EUROPÄISCHE PATENTSCHRIFT

(11) **EP 3 414 590 B1**
(45) Veröffentlichungstag und Bekanntmachung des Hinweises auf die Patenterteilung: **18.03.2020**
(21) Anmeldenummer: 17705090.3
(22) Anmeldetag: 10.02.2017
(51) Int. Cl.: G01S 3/28, G01S 3/40

(54) **VORRICHTUNG UND VERFAHREN ZUR BESTIMMUNG EINER POSITION EINES SENDERS**
DEVICE AND METHOD FOR DETERMINING A POSITION OF A TRANSMITTER
DISPOSITIF ET PROCÉDÉ DE DÉTERMINATION D'UNE POSITION D'UN ÉMETTEUR

(30) Priorität: 12.02.2016 DE 102016202208; 20.07.2016 DE 102016213226
(43) Veröffentlichungstag der Anmeldung: 19.12.2018
(73) Patentinhaber: Fraunhofer-Gesellschaft zur Förderung der angewandten Forschung e.V., 80686 München (DE)
(72) Erfinder: SCHÜHLER, Mario, 91090 Effeltrich (DE); WEISGERBER, Lars, 02727 Ebersbach-Neugersdorf (DE); ARENDT, Johannes, 91054 Erlangen (DE); WANSCH, Rainer, 91083 Baiersdorf (DE); MILOSIU, Heinrich, 91056 Erlangen (DE); OEHLER, Frank, 91325 Adelsdorf (DE)
(74) Vertreter: Hersina, Günter
(86) Internationale Anmeldenummer: PCT/EP2017/053054
(87) Internationale Veröffentlichungsnummer: WO 2017/137590

(56) Entgegenhaltungen:
- US-A1- 2004 127 230
- US-A1- 2009 054 106
- US-A1- 2014 162 691
- US-A1- 2015 309 152

## Beschreibung

Die Erfindung bezieht sich auf eine Vorrichtung zur Bestimmung mindestens einer Information über eine Position eines Senders. Weiterhin bezieht sich die Erfindung auf ein entsprechendes Verfahren zur Bestimmung einer Information über eine Position eines Senders.

Moderne Empfangseinrichtungen für Funksysteme benötigen oft eine zusätzliche Ermittlung der Richtung, aus der die Sender senden. Dabei müssen die empfangenen Signale mit ihrer Richtungsinformation verarbeitet werden.

Dabei verwenden Systeme im Stand der Technik zur Richtungsauflösung meist mehrere Einzelantennen mit hoher Richtwirkung, wobei jeweils ein eigener Empfänger pro Antenne vorgesehen ist. Die empfangenen Daten der Empfangszüge werden mit Peilalgorithmen wie MUSIC ("Multiple Signal Characterization") oder ESPRIT ("Estimation of Signal. Parameters via Rotational Invariance Technique") ausgewertet. Dabei versteht man in der Funkortungstechnik unter einem Zug oder auch Empfangszug im Allgemeinen die Empfangsstrecke, die von der Antenne oder ggf. dem betroffenen Antennenelement ausgeht und zu der Vorrichtung (insbesondere einem Peilempfänger) führt, die das Antennensignal auswertet.

Bei einem vereinfachten Systemaufbau steht für eine Auswertung in der Regel jedoch nur ein Wert für die Feldstärke der empfangenen Signale, also insbesondere der RSSI ("Received Signal Strength Indication")-Wert zur Verfügung. Daher fehlt die PhasenInformation, die zur Richtungsbestimmung benötigt wird.

In [1] wird ein RSSI-basiertes Verfahren zur Richtungsbestimmung in drahtlosen Netzwerken vorgestellt. Durch sukzessives Umschalten von Strahlungsdiagrammen mit abnehmender Keulenbreite kann der zu findende Sender einem Sektor zugeordnet werden. Die Auflösungsgenauigkeit der Einfallsrichtung ist dabei jedoch durch die schmalste Keulenbreite gegeben, was zu großen Antennenaperturen bzw. aufwendigen Keulenformungsnetzwerken führt.

Auch der in [2] präsentierte Ansatz ist hinsichtlich der Auflösungsgenauigkeit von der Keulenbreite abhängig. Eine fest eingestellte Hauptkeule wird dabei mechanisch geschwenkt, bis die Richtung mit dem stärksten RSSI-Wert gefunden wurde.

Ein weiteres RSSI-basiertes Verfahren zeigt [3]. Hier wird durch die räumliche Anordnung der Antennen eine Zuordnung zwischen RSSI-Wert und Raumrichtung erreicht. Die Auflösung ist dabei abhängig von der Keulenbreite der einzelnen Strahler.

Ein RSSI-basierter Ansatz in Kombination mit dem Richtungsschätzalgorithmus MUSIC wird in [4] vorgestellt. Durch die Suche nach dem geeigneten Steering-Vektor wird auf die Signalkovarianzmatrix geschlossen, ohne dass eine Phaseninformation gemessen wird. Die Genauigkeit des Ansatzes hängt stark mit der Richtwirkung der einzelnen Antennen zusammen.

In der Patentschrift US 8,433,337 B2 wird ein Ansatz gezeigt, bei dem die Signale von zwei Antennen über einen 90°-Hybrid-Koppler und einen zusätzlichen schaltbaren Phasenschieber auf vier verschiedene Arten miteinander kombiniert werden. Die Phaseninformation wird dadurch in eine Amplitudeninformation umgewandelt, so dass sich aus den RSSI-Werten auf die Phasenbeziehung zwischen zwei Antennen schließen lässt. Auch bei mehr als zwei Antennen erfolgt stets eine paarweise Kombination, während die verschiedenen Paare nacheinander aktiviert werden.

Die US 2009/0054106 A1 offenbart eine Vorrichtung zur Ermittlung der Richtung eines Transmitters. Dabei wird die Differenz der Empfangswerte über alle Winkel und den bekannten Richtcharakteristiken eines Antennenelements herangezogen. Die Empfangswerte werden solange bezüglich des Winkels rotiert, bis die Summe der Differenzen minimal wird. Daraus ergibt sich die Einfallsrichtung.

Im Stand der Technik sind somit mehrere Antennenvorrichtungen erforderlich, was zu einem erhöhten Raumbereich bzw. zu Befestigungsanforderungen in der Anwendung führt. Alternativ sind mechanische Komponenten erforderlich, die die jeweiligen Antennenvorrichtungen bewegen, was auch zu einem entsprechenden Raumbedarf oder zu Abnutzungserscheinungen führt.

Die der Erfindung zugrundeliegende Aufgabe besteht darin, eine Vorrichtung und ein Verfahren zur Lokalisierung eines Senders vorzuschlagen, die die Nachteile des Standes der Technik vermeiden.

Die Erfindung löst die Aufgabe durch eine Vorrichtung zur Bestimmung mindestens einer Information über eine Position eines Senders. Dabei weist die Vorrichtung eine Antennenvorrichtung, eine Kontrollvorrichtung und eine Datenverarbeitungsvorrichtung auf. Die Antennenvorrichtung weist mehrere unterschiedliche Richtcharakteristiken auf, wobei die Richtcharakteristiken sich jeweils auf eine Menge an räumlich unterschiedlichen Empfangsempfindlichkeiten der Antennenvorrichtung beziehen. Die Kontrollvorrichtung wirkt derartig auf die Antennenvorrichtung ein, dass mindestens eine der Richtcharakteristiken der Antennenvorrichtung aktiviert ist. Die Antennenvorrichtung empfängt mindestens ein von dem Sender ausgehendes Signal, wobei dies mit der aktivierten Richtcharakteristik geschieht. Weiterhin verarbeitet die Datenverarbeitungsvorrichtung das mindestens eine empfangene Signal und die der aktivierten Richtcharakteristik zugeordnete Menge an räumlich unterschiedlichen Empfangsempfindlichkeiten zu einer Menge von gewichteten Empfangswerten. Zudem ermittelt die Datenverarbeitungsvorrichtung mindestens aus der Menge der gewichteten Empfangswerte die Information über die Position des Senders.

Die Vorrichtung zur Bestimmung einer Information über eine Position eines Senders verfügt über eine Antennenvorrichtung, um Signale des Senders zu empfangen. Die empfangenen Signale werden von einer Datenverarbeitungsvorrichtung verarbeitet, um daraus die Information zu ermitteln. Die Antennenvorrichtung ist dadurch ausgezeichnet, dass sie mehrere unterschiedliche Richtcharakteristiken aufweist. Die Richtcharakteristiken beziehen sich dabei auf die räumliche Verteilung der Empfangsempfindlichkeiten. Daher werden nicht aus allen Raumrichtungen Signale gleichmäßig aufgenommen, sondern es gibt Bereiche, aus denen die Antennenvorrichtung bevorzugt Signale empfängt. Damit geht einher, dass beim Empfangen der Signale mit einer ausgesuchten bzw. aktivierten Richtcharakteristik ein Zusammenhang zwischen der Position des Senders und dem empfangenen Signal besteht. Dieser Zusammenhang wird von der Datenverarbeitungsvorrichtung ausgenutzt, die derartig ausgestaltet ist, das empfangene Signal und Daten über die beim Empfang verwendete und somit aktivierte Richtcharakteristik bzw. die Menge der räumlich unterschiedlichen Empfangsempfindlichkeiten zu verarbeiten. Die Datenverarbeitungsvorrichtung ermittelt aus dem empfangenen Signal und den Daten über die Verteilung der Empfangsempfindlichkeiten eine Menge an gewichteten Empfangswerten. Aus der Menge der gewichteten Empfangswerte lässt sich sodann die Information ermitteln. Die Kontrollvorrichtung dient dabei dem Zweck, dass mindestens eine Richtcharakteristik der Antennenvorrichtung aktiviert ist. Dabei werden in einer Ausgestaltung mehrere Richtcharakteristiken aktiviert, so dass es zu überlagerten Richtcharakteristiken kommt.

In einer Ausgestaltung stehen für die Auswertung der empfangenen Signale die Amplituden und die Phasen der Signale zur Verfügung. In einer alternativen Ausgestaltung werden nur die Amplituden der Signale verarbeitet.

In der Vorrichtung ist vorgesehen, dass die Kontrollvorrichtung derartig auf die Antennenvorrichtung einwirkt, dass mehrere unterschiedliche Richtcharakteristiken der Antennenvorrichtung aktiviert sind. Die Richtcharakteristiken werden in einer Ausgestaltung insbesondere nacheinander aktiviert. Dabei empfängt die Antennenvorrichtung zu jeder aktivierten Richtcharakteristik mindestens ein Signal des Senders. Die Datenverarbeitungsvorrichtung verarbeitet die empfangenen Signale und die der jeweils aktivierten Richtcharakteristik zugeordnete Menge an räumlich unterschiedlichen Empfangsempfindlichkeiten jeweils zu einer der jeweils aktivierten Richtcharakteristik zugehörigen Menge von gewichteten Empfangswerten. Zudem verarbeitet die Datenverarbeitungsvorrichtung die zu den unterschiedlichen Richtcharakteristiken zugehörigen Mengen der gewichteten Empfangswerte miteinander.

In dieser Ausgestaltung werden Signale des Senders mit unterschiedlichen aktivierten Richtcharakteristiken empfangen und entsprechend verarbeitet, indem die empfangenen Signale mit den Daten der jeweils verwendeten Richtcharakteristiken zu den gewichteten Empfangswerten verarbeitet werden. Durch das Verwenden von unterschiedlichen Richtcharakteristiken und den damit einhergehenden unterschiedlichen Informationen lassen sich Mehrdeutigkeiten aufheben und lassen sich präzisiere Informationen über die Position des Senders ermitteln. Auch lassen sich für den Fall, dass mehrere Sender vorhanden sind, deren Signale voneinander trennen.

Die folgenden Ausgestaltungen widmen sich der Verarbeitung der Daten der empfangenen Signale und der jeweils aktivierten Richtcharakteristiken durch die Datenverarbeitungsvorrichtung.

Eine Ausgestaltung beinhaltet, dass die Datenverarbeitungsvorrichtung Daten, die die empfangenen Signale beschreiben, und die Mengen von räumlich unterschiedlichen Empfangsempfindlichkeiten der jeweils aktivierten Richtcharakteristiken, die in Matrix-Form vorliegen, miteinander verarbeitet, um die Mengen von gewichteten Empfangswerten ebenfalls in Form von Matrizen zu erhalten. In einer Ausgestaltung werden die Daten der empfangenen Signale und die den Richtcharakteristiken zugehörigen Matrizen miteinander multipliziert.

In einer Ausgestaltung dient die Datenverarbeitungsvorrichtung auch der Daten- bzw. Signalaufzeichnung. Hierfür verfügt die Datenverarbeitungsvorrichtung insbesondere über einen Datenspeicher.

In einer Ausgestaltung ist vorgesehen, dass die Datenverarbeitungsvorrichtung zumindest eine Gruppe der Mengen der gewichteten Empfangswerte, die unterschiedlichen Richtcharakteristiken zugehörig sind, aufaddiert. Durch das Addieren der Mengen der gewichteten Empfangswerte ergeben sich in einer Ausgestaltung Häufungspunkte, die es erlauben, die Position des Senders zu identifizieren. Dabei bezieht sich in einer Ausgestaltung die Gruppe auf einen Teil der ermittelten Mengen der gewichteten Empfangswerte und ist somit eine Teil- oder Untergruppe. In einer alternativen Ausgestaltung bezieht sich die Gruppe auf alle Mengen der gewichteten Empfangswerte, die der Datenverarbeitungsvorrichtung vorliegen.

In einer Ausgestaltung ermittelt die Datenverarbeitungsvorrichtung zumindest zwischen zwei Gruppen der Mengen der gewichteten Empfangswerte eine Differenz. In einer Ausgestaltung weist zumindest eine der zwei Gruppen der Mengen der gewichteten Empfangswerte nur eine Menge der gewichteten Empfangswerte und somit nur die Daten des Signalempfangs mit einer aktivierten Richtcharakteristik auf.

In einer Ausgestaltung ist vorgesehen, dass die zwei Gruppen überlappend sind. In dieser Ausgestaltung findet sich somit in beiden Gruppen zumindest eine gemeinsame Menge an gewichteten Empfangswerten.

In einer alternativen Ausgestaltung sind die zwei Gruppen disjunkt, so dass sich in den Gruppen nur jeweils unterschiedliche Mengen an gewichteten Empfangswerten befinden.

In einer Ausgestaltung ist vorgesehen, dass die Datenverarbeitungsvorrichtung die empfangenen Signale vor einer weiteren Verarbeitung digitalisiert. In dieser Ausgestaltung ist somit mindestens ein Analog-Digital-Wandler vorgesehen, der die analogen Signale der Antennenvorrichtung in digitale Signale umwandelt. In einer alternativen Ausgestaltung weist die Antennenvorrichtung mindestens einen Analog-Digital-Wandler auf, so dass die Antennenvorrichtung bereits digitalisierte Signale an die Datenverarbeitungsvorrichtung ausgibt.

Eine Ausgestaltung beinhaltet, dass die Antennenvorrichtung eine Mehrkeulenantenne ist. Eine Mehrkeulenantenne (andere Bezeichnung ist: Multibeam-Antenne) verfügt in Bezug auf die Empfangsempfindlichkeit (und damit auch für die Sendeeigenschaften) über mehrere Keulen oder zumindest über mehrere Hauptkeulen. Die Keulen sind dabei unterschiedlichen Richtcharakteristiken zugeordnet. Damit geht einher, dass es bei den Richtcharakteristiken jeweils eine Hauptrichtung oder einen Hauptbereich gibt, der der jeweiligen Keule bzw. der Hauptkeule zugeordnet ist. Oder mit anderen Worten: bei jeder aktivierten Richtcharakteristik werden Signale hauptsächlich aus einem räumlichen Bereich empfangen, in dem die jeweils zugehörige (Empfangs-)Keule liegt.

In dieser Ausgestaltung findet daher eine Empfangsdaten- bzw. Empfangssignalverarbeitung in Verbindung mit einer Mehrkeulenantenne statt.

Die Erfindung bezieht sich somit generell auf die Bereitstellung und Trennung von Informationen von empfangenen (Funk-)Signalen aus unterschiedlichen Einfallsrichtungen, die jeweils mit den Richtcharakteristiken verbunden sind, unter Verwendung einer Antennenvorrichtung. Die Antennenvorrichtung verfügt dabei in einer Ausgestaltung über mehrere Antennenelemente, welche in einer weiteren Ausgestaltung durch ein Keulenformungsnetzwerk gesteuert werden. In einer weiteren Ausgestaltung erlaubt die Datenverarbeitung die im Wesentlichen gleichzeitige Analyse und Weiterverarbeitung der empfangenen (in einer Ausgestaltung insbesondere elektromagnetischen) Signale.

Die folgenden Ausgestaltungen beziehen sich insbesondere auf die Antennenvorrichtung in Form der Mehrkeulenantenne.

In einer Ausgestaltung ist vorgesehen, dass die Richtcharakteristiken der als Mehrkeulenantenne ausgestalteten Antennenvorrichtung sich durch die Richtung der Keulen voneinander unterscheiden. Die Keulen sind dabei in einer Ausgestaltung insbesondere die Hauptkeulen, die durch eine Hauptrichtung der jeweiligen Richtcharakteristik gegeben sind.

Eine Ausgestaltung beinhaltet, dass die als Mehrkeulenantenne ausgestaltete Antennenvorrichtung für jede schaltbare Richtcharakteristik einen einzelnen Signalausgang aufweist. In einer Ausgestaltung ist vorgesehen, dass die Antennenvorrichtung stets mit mehreren Richtcharakteristiken Signale empfängt und dass es durch die Antennenvorrichtung selbst oder eine nachgeordnete Komponente möglich ist, die insgesamt gleichzeitig empfangenen Signale hinsichtlich ihrer jeweiligen Richtcharakteristiken aufzutrennen, so dass sich Einzelsignale ergeben, die jeweils einer Richtcharakteristik zugeordnet sind. Das Aktivieren der Richtcharakteristik ist dabei in einer Ausgestaltung das Auswählen der Richtcharakteristik und das Auswerten des mit der aktivierten Richtcharakteristik empfangenen Signals. Alternativ bezieht sich das Aktivieren auf das elektronische Aktivieren, so dass Signale nur mit einer Richtcharakteristik von der Antennenvorrichtung empfangbar sind.

In einer Ausgestaltung ist vorgesehen, dass der Datenverarbeitungsvorrichtung pro aktivierter Richtcharakteristik nur das Signal eines Signalausgangs der Antennenvorrichtung zur Verfügung steht. In dieser Ausgestaltung verarbeitet die Datenverarbeitungsvorrichtung somit jeweils nur ein empfangenes Signal, das der jeweils aktivierten Richtcharakteristik zugeordnet ist. In einer Ausgestaltung werden die empfangenen Signale verarbeitet, nachdem alle Richtcharakteristiken aktiviert worden sind.

Eine Ausgestaltung beinhaltet, dass der Datenverarbeitungsvorrichtung pro aktivierter Richtcharakteristik die Signale mehrerer Signalausgänge der Antennenvorrichtung zur Verfügung stehen. In dieser Ausgestaltung verarbeitet die Datenverarbeitungsvorrichtung somit nicht nur das Signal einer aktivierten und daher speziell ausgewählten Richtcharakteristik, sondern auch die Signale, die anderen Richtcharakteristiken zugeordnet sind.

In einer Ausgestaltung ist vorgesehen, dass die Datenverarbeitungsvorrichtung die Mengen der gewichteten Empfangswerte auf mindestens einer Visualisierungsvorrichtung farbig kodiert darstellt.

Eine Ausgestaltung beinhaltet, dass die Datenverarbeitungsvorrichtung eine Gruppe der Mengen der gewichteten Empfangswerte aufaddiert und mindestens aus einem Häufungsbereich der empfangenen Signale die Information über die Position des Senders ermittelt. Es wird somit ermittelt, aus welchem Raumbereich oder aus welcher Richtung relativ zur Antennenvorrichtung verstärkt Signale stammen.

In einer Ausgestaltung ist vorgesehen, dass die Datenverarbeitungsvorrichtung aus einer Differenz zwischen mindestens zwei Gruppen der Mengen der gewichteten Empfangswerte das Vorliegen von mehreren Sendern ermittelt. Ergeben sich beispielsweise zwei Häufungsbereiche, so zeigt dies die Anwesenheit von zwei Sendern an.

In einer Ausgestaltung wird von der Datenverarbeitungsvorrichtung ein Zwischenergebnis für die Information über die Position des Senders ermittelt und ausgehend davon werden für weitere Schritte die Richtcharakteristiken aktiviert, die zu dem Zwischenergebnis passende Raumbereiche abdecken.

Eine Ausgestaltung beinhaltet, dass die Antennenvorrichtung mindestens ein Signal aussendet, damit von dem Sender ein Signal ausgeht. In dieser Ausgestaltung wird der Sender dazu animiert, wenigstens ein Signal auszusenden. Dabei ist in einer Ausgestaltung vorgesehen, dass der Sender durch das von der Antennenvorrichtung ausgesendete Signal Energie zum Aussenden des Signals erhält. In einer alternativen Ausgestaltung handelt es sich bei dem von dem Sender ausgehenden Signal um ein Reflexionssignal, das sich durch die Reflexion des von der Antennenvorrichtung ausgehenden Signals an dem Sender ergibt. In dieser Ausgestaltung handelt es sich bei dem Sender beispielsweise um einen RFID-Tag.

Eine Ausgestaltung beinhaltet, dass die Antennenvorrichtung und die Datenverarbeitungsvorrichtung derartig ausgestaltet sind, von dem Sender aktiv erzeugte Signale als von dem Sender ausgehende Signale zu empfangen und zu verarbeiten. In einer Ausgestaltung erzeugt der Sender aktiv Signale, indem er selbsttätig Signale aussendet. In einer weiteren Ausgestaltung wird der Sender von dem Signal der Antennenvorrichtung aktiviert und sendet dann Signale aktiv aus. Aktives Erzeugen bedeutet in einer Ausgestaltung auch das Empfangen und Aussenden von Signalen mit gewissen Veränderungen, z. B. das Verschieben der Frequenz oder das Aufprägen einer Information.

In einer Ausgestaltung ist vorgesehen, dass die Antennenvorrichtung und die Datenverarbeitungsvorrichtung derartig ausgestaltet sind, von dem Sender reflektierte Signale als von dem Sender ausgehende Signale zu empfangen und zu verarbeiten. Der Sender ist in dieser Ausgestaltung also beispielsweise ein Objekt, das mit RADAR-Signalen bestrahlt wird und die Signale entsprechend reflektiert.

In einer Ausgestaltung ist vorgesehen, dass die Datenverarbeitungsvorrichtung eine Unsicherheit der ermittelten Information über die Position des Senders in Abhängigkeit von einer Keulenbreite der Keulen der aktivierten Richtcharakteristiken der als Mehrkeulenantenne ausgestalteten Antennenvorrichtung ermittelt.

Weiterhin löst die Erfindung die Aufgabe durch ein Verfahren zur Bestimmung einer Information über eine Position eines Senders gemäß Anspruch 12. Dabei wird mindestens ein von dem Sender ausgehendes Signal empfangen. Dies geschieht mit mindestens einer Richtcharakteristik, die sich auf eine Menge an räumlich unterschiedlichen Empfangsempfindlichkeiten bezieht. Zudem werden das mindestens eine empfangene Signal und die der zugehörigen Richtcharakteristik zugeordnete Menge an räumlich unterschiedlichen Empfangsempfindlichkeiten zu einer Menge von gewichteten Empfangswerten verarbeitet. Zumindest aus der Menge der gewichteten Empfangswerte wird die Information über die Position des Senders ermittelt.

In einer Ausgestaltung wird mindestens eine Richtcharakteristik einer Antennenvorrichtung aktiviert.

Die Ausgestaltungen der Vorrichtungen lassen sich entsprechend auch durch das Verfahren realisieren, so dass die zugehörigen Ausführungen auch entsprechend gelten. Dies gilt auch umgekehrt, so dass sich das Verfahren auch durch die Vorrichtung realisieren lässt.

Die Erfindung umfasst in einer Ausgestaltung eine Kombination aus einer Mehrkeulenantenne mit aktivierbaren Richtcharakteristiken und einer Datenverarbeitungsvorrichtung, die in einer Ausgestaltung aus einem Signal-Empfänger mit einer Signalverarbeitung (z. B. in Form eines "Digital Signal Processor", DSP oder eines "Field Programmable Gate Array", FPGA, oder eine CPU oder ein Mikroprozessor z. B. basierend auf einer ARM-Architektur) besteht. Optional ist in einer Ausgestaltung ein Datenspeicher vorhanden. Dabei dient in einer Ausgestaltung die Vorrichtung zur Lokalisierung von Funksendern bzw. Funk-Transpondern, z. B. RFID-Transpondern. In einer Ausgestaltung erlaubt die Vorrichtung die Trennung der Empfangssignale in verschiedene Einfallsrichtungen und damit in die verschiedenen Richtungen der Sender.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:
- Fig. 1: eine schematische Darstellung einer erfindungsgemäßen Vorrichtung und deren Anwendung,
- Fig. 2: eine Prinzip-Skizze zur Verdeutlichung des Verfahrens mit einer Ausgestaltung der Vorrichtung und
- Fig. 3: eine Prinzip-Skizze mit einer weiteren Ausgestaltung der Vorrichtung.

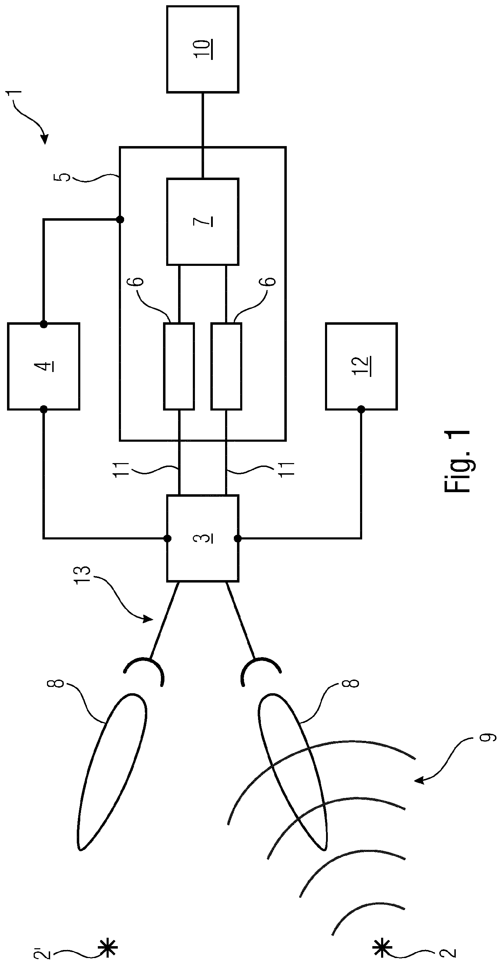

Die Fig. 1 zeigt eine Anwendung der erfindungsgemäßen Vorrichtung 1, die hier dazu verwendet wird, um die Positionen von zwei unterschiedlichen Sendern 2, 2' (z. B. RFID-Transponder oder allgemein Funksender) zu ermitteln, also um diese zu lokalisieren. Dafür verfügt die Vorrichtung 1 über eine Antennenvorrichtung 3, die mehrere Antennenelemente 13 aufweist, von denen hier beispielhaft zwei dargestellt sind. Die Steuerung der Antennenvorrichtung 3 geschieht über eine Kontrollvorrichtung 4, die auch mit einer Datenverarbeitungsvorrichtung 5 verbunden ist.

In der Datenverarbeitungsvorrichtung 5 befinden sich hier zwei ADC-Wandler 6, die die von der Antennenvorrichtung 3 empfangenen Signale in digitale Form umwandeln, und die jeweils zu einem Empfangszug gehören. In einer alternativen - nicht dargestellten - Ausgestaltung sind die ADC-Wandler Bestandteile der Antennenvorrichtung 3 (die alternativ auch als Empfänger bezeichnet werden kann), so dass die Datenverarbeitungsvorrichtung 5 direkt die digitalen Signalen empfängt. Die digitalen Signale werden dann von einer Rechenvorrichtung 7 verarbeitet.

Die Antennenvorrichtung 3 verfügt über mehrere spezifische Richtcharakteristiken 8. Die Kontrollvorrichtung 4 aktiviert die Richtcharakteristiken 8 für den Empfang der von den Sendern 2, 2' ausgehenden (sei es beispielsweise durch aktive Erzeugung oder sei es durch Reflexion) Signale 9.

Die Antennenvorrichtung 3 verfügt über Signalausgänge 11, die jeweils einer spezifischen Richtcharakteristik 8 zugeordnet sind. Die Antennenvorrichtung 3 ist weiterhin derartig ausgestaltet, dass an jedem Signalausgang 11 das Signal ausgegeben wird, welches mit der jeweils zugeordneten Richtcharakteristik 8 empfangen worden ist. Dies geschieht hier als Beispiel über eine Butler-Matrix. In einer alternativen Ausgestaltung wird ein Eigenmodennetzwerk erzeugt.

Daher empfängt in einer Ausgestaltung die Datenverarbeitungsvorrichtung 5 die empfangenen Signale von mehreren Richtcharakteristiken, d. h. von mehreren Signalausgängen 11 gleichzeitig. In einer alternativen Ausgestaltung - bei der z. B. auch nur ein Empfangszug erforderlich ist - empfängt die Datenverarbeitungsvorrichtung 5 jeweils nur das mit einer Richtcharakteristik empfangene Signal, wobei in einer Ausgestaltung nach einem vorgegebenen Schema zwischen den Richtcharakteristiken gewechselt wird.

Das Wechseln zwischen den Richtcharakteristiken erfolgt dabei in einer Ausgestaltung nach einer Art von Zwischenauswertung. Dabei wird beispielsweise eine Richtung ermittelt wird, aus der verstärkt die empfangenen Signale stammen, so dass bei den folgenden Messungen die Richtcharakteristiken bevorzugt werden, die sich auf diese ermittelte Richtung beziehen.

Die Datenverarbeitungsvorrichtung 5 (z. B. realisiert als DSP oder FPGA und ggf. Teil der Antennenvorrichtung 3) wertet die empfangenen Signale derartig aus, dass sie auf die Daten zurückgreift, die die Richtcharakteristiken beschreiben. Die Richtcharakteristiken bestehen insbesondere darin, dass die Antennenvorrichtung 3 eine jeweils zugeordnete Empfangsempfindlichkeit aufweist. Je nach Richtcharakteristik gibt es also räumlich verteilte Bereiche mit höherer bzw. geringerer Empfindlichkeit für den Empfang von Signalen. In einer Ausgestaltung werden die - z. B. durch Messungen und/oder theoretische Betrachtungen ermittelten - Daten über die Empfindlichkeiten so für die weitere Verarbeitung abgelegt, dass sie als Matrizen aufgefasst werden können. In einer Ausgestaltung sind die Richtcharakteristiken insbesondere jeweils durch eine Keule gekennzeichnet, die eine Hauptrichtung vorgibt.

Die Datenverarbeitungsvorrichtung 5 verarbeitet beispielsweise die digitalisierten empfangenen Signale und die Richtcharakteristiken miteinander, indem die Daten passend multipliziert werden, indem also die empfangenen Signale auf die Richtcharakteristiken abgebildet werden und sich gewichtete Empfangswerte ergeben. Bei den als Matrizen erfassten Empfindlichkeiten der Richtcharakteristiken ergibt sich pro Richtcharakteristik eine Matrix mit den gewichteten Empfangswerten. Die Multiplikation erfolgt dabei beispielsweise über den Zugriff auf bereits abgespeicherte Tabellen oder Wertepaare. Alternativ werden in einer Ausgestaltung für einzelne Richtcharakteristiken zu unterschiedlichen Zeitpunkten Signale empfangen. Dies erlaubt bei unbewegten Sendern die Verbesserung der Messgenauigkeit und erlaubt ggf. auch das Erkennen einer Bewegung eines Senders.

Um die Positionen der Sender 2, 2' zu ermitteln, werden die gewichteten Empfangswerte miteinander verarbeitet. So werden in einer Ausgestaltung die Matrizen mit den gewichteten Empfangswerten addiert. In einer weiteren Ausgestaltung werden zumindest zwei Gruppen (bzw. Teilgruppen) der gewichteten Empfangswerte jeweils aufaddiert und wird anschließend die Differenz zwischen den beiden Summen-Matrizen gebildet. Damit lassen sich beispielsweise die Signale von den zwei an unterschiedlichen Positionen befindlichen Sendern 2, 2' voneinander trennen. Für die gemeinsame Verarbeitung beziehen sich die gewichteten Empfangswerte vorzugsweise zumindest teilweise auf die gleichen räumlichen Bereiche um die Vorrichtung 1 herum.

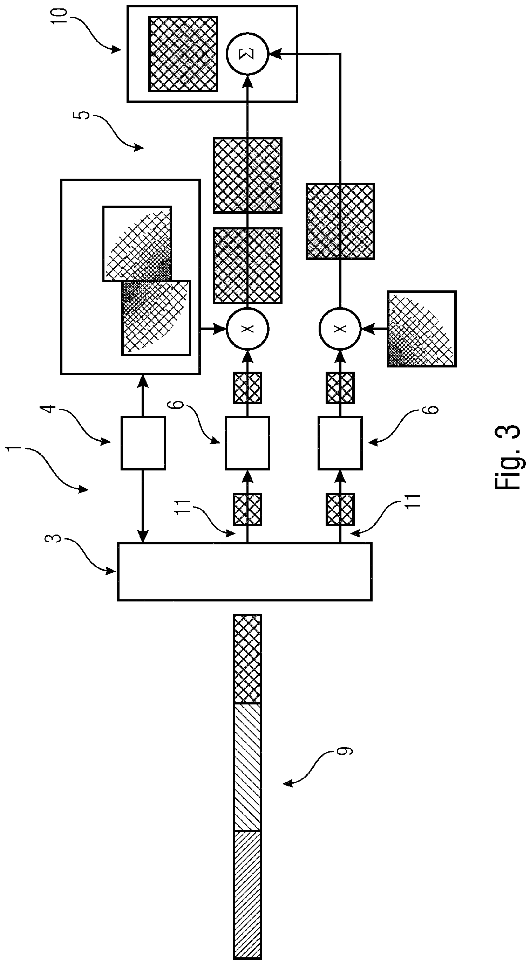

In einer Ausgestaltung werden die gewichteten Empfangswerte unter Verwendung einer vorgebbaren Farbskala (oder wie in der Fig. 3 mit einer Skala von Grautönen) auf einer Visualisierungsvorrichtung 10, z. B. einem Monitor, einem Smartphone, einem Tablet, einem Handheld oder einer Brille für virtuelle Realität dargestellt.

Das erfindungsgemäße Verfahren umfasst also zumindest die folgenden Schritte:
Es wird eine Richtcharakteristik der Antennenvorrichtung aktiviert, die sich auf eine bestimmte Verteilung der räumlichen Empfindlichkeit der Antennenvorrichtung bezieht. Dabei ist die jeweils zugeordnete Verteilung der Empfindlichkeit bekannt, z. B. durch vorherige Kalibrierungsmessungen oder durch die theoretische Kenntnis über die Antennenvorrichtung und deren Eigenschaften. Das Aktivieren einer Richtcharakteristik bedeutet dabei, dass die über die aktivierte Richtcharakteristik empfangenen Signale einer Auswertung bzw. einer Weiterverarbeitung zur Verfügung stehen oder z. B. registriert werden.

Mit der aktivierten Richtcharakteristik wird ein Signal des Senders empfangen und mit den Daten über die Richtcharakteristik verarbeitet, so dass sich gewichtete Empfangswerte ergeben. In einer Ausgestaltung wird die Empfindlichkeitsverteilung durch eine Matrix beschrieben, die mit den Daten des empfangenen Signals multipliziert wird.

Zu den unterschiedlichen Richtcharakteristiken wird jeweils mindestens ein Signal empfangen und ausgewertet. Aus den sich ergebenden gewichteten Empfangswerten wird schließlich die Information über die Position mindestens eines Senders ermitteln. Die Information bezieht sich dabei je nach Ausgestaltung beispielsweise auf eine Richtung oder eine Position relativ zur Vorrichtung bzw. relativ zur Antennenvorrichtung. Die Information bezieht sich ggf. auch auf die relative Position von zwei Sendern zueinander oder auf die Veränderung der Position usw..

Die Vorrichtung 1 weist in dem dargestellten Beispiel eine Signalquelle 12 auf, die der Erzeugung von Anregungs-, Abfrage- oder z. B. sogenannten Request Signalen dient. Die Signale der Signalquelle 12 werden mit einer gewählten Richtcharakteristik in Richtung der Sender 2, 2' ausgestrahlt. Die jeweils aktivierte Richtcharakteristik ergibt sich in einer Ausgestaltung dadurch, dass mehrere der für den Empfang der Signal verwendeten und hier den Antennenelementen zugeordneten Richtcharakteristiken gemeinsam aktiviert und daher überlagert werden.

Das Ausstrahlen der Anregungssignale erlaubt es, auch passive Sender bzw. deren Position zu vermessen, indem sie durch das Anregungssignal zum Ausstrahlen von Signalen aktiviert werden und/oder die hierfür erforderliche Energie erhalten. Letzteres bezieht sich insbesondere auf den Fall, dass es sich bei den Sendern um RFID-Tags handelt. In einer weiteren Ausgestaltung strahlen die Sender die Signale durch Reflexion aus. Dies ist z. B. der Fall, wenn es sich um eine Radaranwendung handelt. Das bedeutet, dass die Signalquelle 12 Radarsignale erzeugt und dass die Sender 2, 2' als Reflektoren wirken.

Optional sind ein Datenspeicher und/oder eine Kontrolleinheit (z. B. ein Server-PC) vorhanden. Auf die Datenverarbeitungsvorrichtung 5 können damit durch Steuerungsdaten noch ein Server und ggf. weitere Clients einwirken.

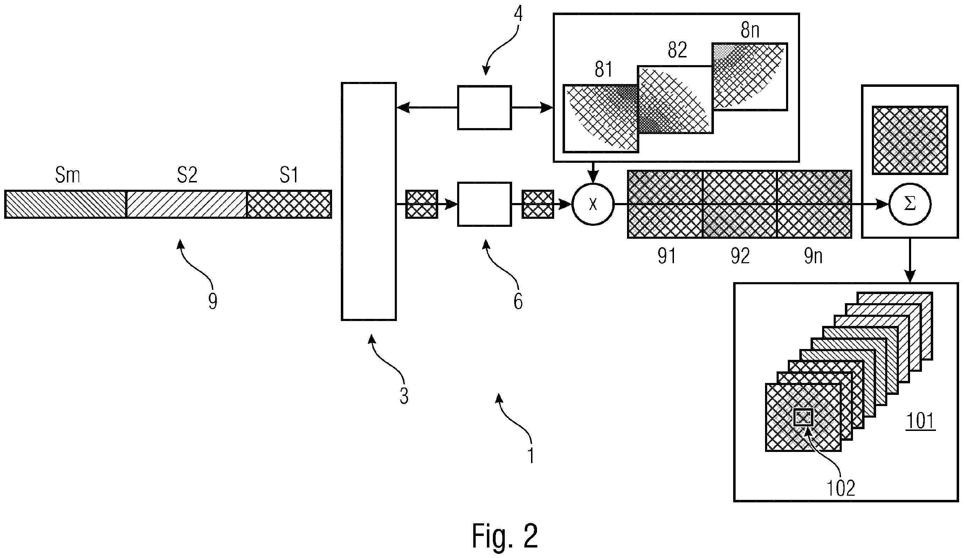

Das Prinzip der Erfindung besonders im Hinblick auf die Auswertung verdeutlicht die Fig. 2 anhand einer Ausgestaltung.

Ein - hier nicht dargestellter - Sender sendet Signale S1, S2 ... Sm aus, welche hier als Symbole interpretiert werden. Die Signale S1, S2 ... Sm werden von einer Mehrkeulenantenne 3 empfangen. Die Kontrolleinheit 4 aktiviert nach einem vorgegebenen Muster die Keulen der Mehrkeulenantenne 3 bzw. aktiviert die unterschiedlichen Richtcharakteristiken. Das Muster zum Wechsel zwischen den Richtcharakteristiken erfolgt in einer Ausgestaltung nach Zufall. In einer anderen Ausgestaltung sind ausgezeichnete Richtungen vorgesehen, so dass bevorzugt die Keulen aktiviert werden, die in diese ausgezeichneten Richtungen weisen.

Die Signale 9 aus der angesteuerten Keule werden von einem Empfangszug demoduliert und digitalisiert.

Die digitalisierten Signale werden jeweils mit der Richtcharakteristik 81, 82 ... 8n multipliziert, die der durch die Kontrolleinheit 4 selektierten Keulen zugeordnet ist (siehe das Multiplikationszeichen und den oberen Kasten mit hier drei Richtcharakteristiken). Damit ergibt sich jeweils eine Matrix mit gewichteten Empfangswerten 91, 92, ..., 9n.

Die Matrizen 91, 92, ..., 9n werden aufsummiert (dargestellt durch ein Summenzeichen Σ) und werden hier beispielsweise in einem Speicher 101 abgelegt.

In einer alternativen Ausgestaltung wird eine Untermenge (oder Gruppe) der Matrizen aufsummiert. Es können weiterhin verschiedene Untermengen der Matrizen gebildet und aufsummiert werden. Dies ermöglicht die Erkennung von Mehrwegen der Signale oder das Erkennen von mehreren Funksignalen bzw. Sendern.

So wird in einer Ausgestaltung eine Untermenge U1 aus den Matrizen 91 und 92 gebildet. Eine weitere Untermenge U2 wird aus den Matrizen 91, 92 und 93 gebildet usw.. Der Vergleich zwischen den aufsummierten Untermengen kann Aufschluss über die Anzahl der Funksender bzw. -Transponder und das Vorhandensein von Mehrwegen geben. Die Untermengen oder Gruppen können überlappend oder nicht-überlappend sein.

Aus den abgespeicherten Matrizen wird im dargestellten Beispiel das gewünschte Signal 102 entnommen.

Alternativ wird wenigstens eine Matrix der gewichteten Empfangswerte als Empfangswertematrix an eine Visualisierungseinheit übergeben. Eine visuelle Richtungsbestimmung erfolgt vorzugsweise durch eine Kolorierung der Matrixwerte. Optional kann auch das Maximum der Matrix gesucht und markiert werden. Optional kann ein gewünschtes Feld der Matrix digital weiterverarbeitet werden oder über einen Digital zu Analogumsetzer an eine weitere Verarbeitungseinheit übergeben werden.

Die Fig. 3 zeigt eine parallele Verarbeitung mehrerer Empfangszüge - also Pfade zum Empfangen von Signalen von der Antenne zur Auswertevorrichtung - bei Verwendung einer Merkeulenantenne 3 mit mehreren Ausgängen 11:
Eine parallele Verarbeitung mehrerer Empfangszüge ist hier ermöglicht durch Verwendung einer Mehrkeulenantenne 3 mit mehreren (hier zwei) Ausgängen 11 und vorzugsweise mehreren Empfangszügen.

Stehen mehrere Ausgänge 11 der Mehrkeulenantenne 3 und daher mehrere Empfangszüge zur Verfügung, so können auch mehrere Pfade in der Datenverarbeitungsvorrichtung 5 verarbeitet werden. Dies bezieht sich insbesondere auf den Fall, dass die Mehrkeulenantenne 3 auch in dem Fall, dass nur eine Richtcharakteristik aktiviert ist, auch die mit den anderen Richtcharakteristiken empfangenen Signale ausgeben kann. Hierfür ist beispielsweise die Butler-Matrix in der Antennenvorrichtung 3 realisiert.

Ein Vorteil der Erfindung besteht darin, dass eine Antennenvorrichtung 3 ausreichend ist, um einen Sender zu lokalisieren und um gleichzeitig auch die ausgesendeten Signale auszuwerten.

In einer Ausgestaltung beschränkt sich die Auswertung auf die Multiplikation der empfangenen Signale mit den Daten der jeweiligen Richtcharakteristik. In einer Ausgestaltung werden auch lediglich diese gewichteten Empfangswerte aufaddiert, so dass auch hier kaum Verarbeitungsaufwand entsteht. Insbesondere werden keine komplexen Daten benötigt.

In einer Ausgestaltung, die den Verarbeitungsaufwand weiter reduziert, werden die zu verarbeiteten Datenmengen reduziert, indem von den in Form von Matrizen vorliegenden Daten nur ausgewählte Teilbereiche, die gewünschten Richtungen entsprechen, ausgewertet werden.

Die Antennenvorrichtung weist in einer Ausgestaltung mehrere Einzelantennen auf, welche durch eine Schaltmatrix an die Empfangseinheit angeschlossen werden.

Anwendungsgebiete liegen beispielsweise im Bereich der Logistik. Die Vorrichtung erlaubt die Verwaltung von Objekten innerhalb von Lagerhallen und Produktionsumgebungen oder ermöglicht die autonome Navigation von Flurförderfahrzeugen.

Eine weitere Anwendung liegt im Gebiet der Produktion für die Verwaltung von Werkstücken und Werkstückträgern.

Weitere Anwendungen sind generell die Peilung von Sendern, die Nachrichtenübertragung oder speziell der Mobilfunk. Weiterhin gibt es die Messung von Durchlaufgeschwindigkeiten von mit Sendern versehenen Objekten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) oder ein Mikroprozessor (z. B. basierend auf einer ARM-Architektur) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] A. Kalis et al., "Direction Finding in IEEE802.11 Wireless Networks," IEEE Transactions on Instrumentation and Measurement, vol. 51, no. 5, pp. 940 - 948, Oct. 2002.
[2] B. N. Hood et al., "Estimating DoA From Radio-Frequency RSSI Measurements Using an Actuated Reflector," IEEE Sensors Journal, vol. 11, no. 2, pp. 413 - 417, Feb. 2011.
[3] Gianni Giorgetti et al., "Single-Anchor Indoor Localization Using a Switched-Beam Antenna," IEEE Communications Letters, vol. 13, no. 1, pp. 1 - 3, Jan. 2009.
[4] M. Passafiume et al., "On the duality of Phase-based and Phase-Iess RSSI MUSIC algorithm for Direction of Arrival estimation," Recent Advances in Electrical and Electronic Engineering, 2014.

## Patentansprüche

1. Vorrichtung (1) zur Bestimmung mindestens einer Information über eine Position eines Senders (2),
mit einer Antennenvorrichtung (3), einer Kontrollvorrichtung (4) und einer Datenverarbeitungsvorrichtung (5),
wobei die Antennenvorrichtung (3) mehrere unterschiedliche Richtcharakteristiken (8) aufweist,
wobei die Richtcharakteristiken (8) sich jeweils auf eine Menge an räumlich unterschiedlichen Empfangsempfindlichkeiten der Antennenvorrichtung (3) beziehen,
wobei die Kontrollvorrichtung (4) derartig auf die Antennenvorrichtung (3) einwirkt, dass mehrere unterschiedliche Richtcharakteristiken (8) der Antennenvorrichtung (3) aktiviert sind, und
wobei die Antennenvorrichtung (3) zu jeder aktivierten Richtcharakteristik (8) mindestens ein von dem Sender (2) ausgehendes Signal (9) empfängt,
**dadurch gekennzeichnet, dass** die Datenverarbeitungsvorrichtung (5) die empfangenen Signale und die der jeweils aktivierten Richtcharakteristik (8) zugeordnete Menge an räumlich unterschiedlichen Empfangsempfindlichkeiten jeweils zu einer der jeweils aktivierten Richtcharakteristik zugehörigen Menge von gewichteten Empfangswerten verarbeitet und die zu den unterschiedlichen Richtcharakteristiken zugehörigen Mengen der gewichteten Empfangswerte miteinander verarbeitet und mindestens aus den Mengen der gewichteten Empfangswerte die Information über die Position des Senders (2) ermittelt.

2. Vorrichtung (1) nach Anspruch 1,
wobei die Datenverarbeitungsvorrichtung (5) die empfangenen Signale beschreibende Daten und die jeweils als Matrix vorliegenden Mengen von räumlich unterschiedlichen Empfangsempfindlichkeiten der jeweils aktivierten Richtcharakteristiken miteinander verarbeitet - insbesondere multipliziert -, um die Mengen von gewichteten Empfangswerten in Form von Matrizen zu erhalten.

3. Vorrichtung (1) nach Anspruch 1 oder 2,
wobei die Datenverarbeitungsvorrichtung (5) zumindest eine Gruppe der Mengen der gewichteten Empfangswerte, die unterschiedlichen Richtcharakteristiken zugehörig sind, aufaddiert und mindestens aus einem Häufungsbereich der empfangenen Signale die Information über die Position des Senders (2) ermittelt.

4. Vorrichtung (1) nach einem der Ansprüche 1 bis 3,
wobei die Datenverarbeitungsvorrichtung (5) zumindest zwischen zwei Gruppen der Mengen der gewichteten Empfangswerte eine Differenz ermittelt, und
wobei die Datenverarbeitungsvorrichtung (5) aus der Differenz das Vorliegen von mehreren Sendern (2, 2') ermittelt.

5. Vorrichtung (1) nach einem der Ansprüche 1 bis 4,
wobei die Antennenvorrichtung (3) eine Mehrkeulenantenne ist, und
wobei die Richtcharakteristiken (8) der als Mehrkeulenantenne ausgestalteten Antennenvorrichtung (3) sich durch die Richtung der Keulen voneinander unterscheiden.

6. Vorrichtung (1) nach Anspruch 5,
wobei die als Mehrkeulenantenne ausgestaltete Antennenvorrichtung (3) für jede schaltbare Richtcharakteristik einen einzelnen Signalausgang (11) aufweist.

7. Vorrichtung (1) nach einem der Ansprüche 1 bis 6,
wobei der Datenverarbeitungsvorrichtung (5) pro aktivierter Richtcharakteristik nur das Signal eines Signalausgangs (11) der Antennenvorrichtung (3) zur Verfügung steht.

8. Vorrichtung (1) nach einem der Ansprüche 1 bis 6, wobei der Datenverarbeitungsvorrichtung (5) pro aktivierter Richtcharakteristik die Signale mehrerer Signalausgänge (11) der Antennenvorrichtung (3) zur Verfügung stehen.

9. Vorrichtung (1) nach einem der Ansprüche 1 bis 8,
wobei die Antennenvorrichtung (3) mindestens ein Signal aussendet, damit von dem Sender (2) ein Signal ausgeht.

10. Vorrichtung (1) nach einem der Ansprüche 1 bis 9,
wobei die Antennenvorrichtung (3) und die Datenverarbeitungsvorrichtung (5) derartig ausgestaltet sind, von dem Sender (3) reflektierte Signale als von dem Sender (3) ausgehende Signale (9) zu empfangen und zu verarbeiten.

11. Vorrichtung (1) nach einem der Ansprüche 1 bis 10,
wobei die Datenverarbeitungsvorrichtung (5) die Mengen der gewichteten Empfangswerte auf mindestens einer Visualisierungsvorrichtung (10) farbig kodiert darstellt.

12. Verfahren zur Bestimmung einer Information über eine Position eines Senders (2),
wobei von dem Sender (2) ausgehende Signale mit mehreren unterschiedlichen sich jeweils auf eine Menge an räumlich unterschiedlichen Empfangsempfindlichkeiten beziehenden Richtcharakteristiken empfangen werden,
wobei die empfangenen Signale und die der jeweils zugehörigen Richtcharakteristik (8) zugeordnete Menge an räumlich unterschiedlichen Empfangsempfindlichkeiten jeweils zu einer Menge von gewichteten Empfangswerten verarbeitet werden, **dadurch gekennzeichnet, dass** die zu den unterschiedlichen Richtcharakteristiken zugehörigen Mengen der gewichteten Empfangswerte miteinander verarbeitet werden, und
dass mindestens aus den miteinander verarbeiteten Mengen der gewichteten Empfangswerte die Information über die Position des Senders (2) ermittelt wird.

## Claims

1. An apparatus (1) for determining at least one piece of information on a position of a transmitter (2),
comprising an antenna apparatus (3), a control apparatus (4) and a data processing apparatus (5),
wherein the antenna apparatus (3) comprises several different directional characteristics (8),
wherein the directional characteristics (8) each relate to an amount of spatially different receive sensitivities of the antenna apparatus (3),
wherein the control apparatus (4) influences the antenna apparatus (3) such that several different directional characteristics (8) of the antenna apparatus (3) are activated, and
wherein the antenna apparatus (3) receives at least one signal (9) originating from the transmitter (2) for each activated directional characteristics (8),
**characterized in that** the data processing apparatus (5) processes the received signals and the amount of spatially different receive sensitivities allocated to the respectively activated directional characteristic (8) to an amount of weighted receive values related to the respectively activated directional characteristic and processes the amounts of weighted receive values related to the different directional characteristics together and determines the information on the position of the transmitter (2) at least from the amounts of weighted receive values.

2. The apparatus (1) according to claim 1,
wherein the data processing apparatus (5) processes data describing the received signals and the amounts of spatially different receive sensitivities of the respectively activated directional characteristics each present as matrix together, in particular multiplies the same, in order to obtain the amounts of weighted receive values in the form of matrices.

3. The apparatus (1) according to claim 1 or 2,
wherein the data processing apparatus (5) adds up at least one group of the amounts of weighted receive values related to different directional characteristics, and determines the information on the position of the transmitter (2) at least from an accumulation area of the received signals.

4. The apparatus (1) according to any of claims 1 to 3,
wherein the data processing apparatus (5) determines a difference at least between two groups of the amounts of weighted receive values, and
wherein the data processing apparatus (5) determines the presence of several transmitters (2, 2') from the difference.

5. The apparatus (1) according to any of claims 1 to 4,
wherein the antenna apparatus (3) is a multi-beam antenna and
wherein the directional characteristics (8) of the antenna apparatus (3) implemented as multi-beam antenna differ from one another by the direction of the beams.

6. The apparatus (1) according to claim 5,
wherein the antenna apparatus (3) implemented as multi-beam antenna comprises an individual signal output (11) for each switchable directional characteristic.

7. The apparatus (1) according to any of claims 1 to 6,
wherein only the signal of one signal output (11) of the antenna apparatus (3) is available for the data processing apparatus (5) per activated directional characteristic.

8. The apparatus (1) according to any of claims 1 to 6,
wherein the signals of several signal outputs (11) of the antenna apparatus (3) are available for the data processing apparatus (5) per activated directional characteristic.

9. The apparatus (1) according to any of claims 1 to 8,
wherein the antenna apparatus (3) emits at least one signal so that a signal originates from the transmitter (2).

10. The apparatus (1) according to any of claims 1 to 9,
wherein the antenna apparatus (3) and the data processing apparatus (5) are configured to receive and to process signals reflected by the transmitter (3) as signals (9) originating from the transmitter (3).

11. The apparatus (1) according to any of claims 1 to 10,
wherein the data processing apparatus (5) presents the amounts of weighted receive values in a color-coded manner on at least one visualization apparatus (10).

12. A method for determining information on a position of a transmitter (2), wherein signals originating from the transmitter (2) are received with several different directional characteristics each related to an amount of spatially different receive sensitivities,
wherein the received signals and the amount of spatially different receive sensitivities allocated to the respectively related directional characteristic (8) are each processed to an amount of weighted receive values,
**characterized in that** the amounts of weighted receive values related to the different directional characteristics are processed together and
that the information on the position of the transmitter (2) is determined at least from the amounts of weighted receive values processed together.

## Revendications

1. Dispositif (1) pour déterminer au moins une information relative à la position d'un émetteur (2),
avec un dispositif d'antenne (3), un dispositif de contrôle (4) et un dispositif de traitement de données (5),
dans lequel le dispositif d'antenne (3) présente une pluralité de caractéristiques directionnelles différentes (8),
dans lequel les caractéristiques directionnelles (8) se rapportent, chacune, à une quantité de sensibilités de réception spatialement différentes du dispositif d'antenne (3),
dans lequel le dispositif de contrôle (4) agit sur le dispositif d'antenne (3) de sorte que soient activées plusieurs caractéristiques directionnelles différentes (8) du dispositif d'antenne (3), et
dans lequel le dispositif d'antenne (3) reçoit à chaque caractéristique directionnelle activée (8) au moins un signal (9) sortant de l'émetteur (2),
**caractérisé par le fait que** le dispositif de traitement de données (5) traite les signaux reçus et la quantité de sensibilités de réception spatialement différentes associées à la caractéristique directionnelle activée (8) respective pour obtenir respectivement une quantité de valeurs de réception pondérées appartenant à la caractéristique directionnelle activée respective, et traite ensemble les quantités des valeurs de réception pondérées appartenant aux différentes caractéristiques directionnelles et détermine, au moins à partir des quantités des valeurs reçues pondérées, l'information relative à la position de l'émetteur (2).

2. Dispositif (1) selon la revendication 1,
dans lequel le dispositif de traitement de données (5) traite - en particulier multiplie - les données décrivant les signaux reçus et les quantités de sensibilités de réception différentes présentes respectivement sous forme de matrice des caractéristiques directionnelles activées respectives pour obtenir les quantités de valeurs de réception pondérées sous forme de matrices.

3. Dispositif (1) selon la revendication 1 ou 2,
dans lequel le dispositif de traitement de données (5) additionne au moins un groupe des quantités des valeurs de réception pondérées qui appartiennent à différentes caractéristiques directionnelles et détermine, à partir d'au moins une zone d'accumulation des signaux reçus, les informations relatives à la position de l'émetteur (2).

4. Dispositif (1) selon l'une des revendications 1 à 3,
dans lequel le dispositif de traitement de données (5) détermine une différence au moins entre deux groupes des quantités des valeurs reçues pondérées, et
dans lequel le dispositif de traitement de données (5) détermine, à partir de la différence, la présence de plusieurs émetteurs (2, 2').

5. Dispositif (1) selon l'une des revendications 1 à 4,
dans lequel le dispositif d'antenne (3) est une antenne à plusieurs lobes, et
dans lequel les caractéristiques directionnelles (8) du dispositif d'antenne réalisé sous forme d'antenne à plusieurs lobes (3) diffèrent entre elles par la direction des lobes.

6. Dispositif (1) selon la revendication 5,
dans lequel le dispositif d'antenne réalisé sous forme d'antenne à plusieurs lobes (3) présente, pour chaque caractéristique directionnelle commutable, une sortie de signal unique (11).

7. Dispositif (1) selon l'une des revendications 1 à 6,
dans lequel seul le signal d'une sortie de signal (11) du dispositif d'antenne (3) est disponible pour le dispositif de traitement de données (5) par caractéristique directionnelle activée.

8. Dispositif (1) selon l'une des revendications 1 à 6,
dans lequel les signaux de plusieurs sorties de signaux (11) du dispositif d'antenne (3) sont disponibles pour le dispositif de traitement de données (5) par caractéristique directionnelle activée.

9. Dispositif (1) selon l'une des revendications 1 à 8,
dans lequel le dispositif d'antenne (3) émet au moins un signal pour que sorte un signal de l'émetteur (2).

10. Dispositif (1) selon l'une des revendications 1 à 9,
dans lequel le dispositif d'antenne (3) et le dispositif de traitement de données (5) sont conçus pour recevoir de l'émetteur (3) et traiter des signaux réfléchis comme signaux (9) sortant de l'émetteur (3).

11. Dispositif (1) selon l'une des revendications 1 à 10,
dans lequel le dispositif de traitement de données (5) représente les quantités des valeurs de réception pondérées de forme codée par couleur sur au moins un dispositif de visualisation (10).

12. Procédé de détermination d'une information relative à une position d'un émetteur (2), dans lequel les signaux sortant de l'émetteur (2) sont reçus avec plusieurs caractéristiques directionnelles différentes se rapportant respectivement à une quantité de sensibilités de réception spatialement différentes, dans lequel les signaux reçus et la quantité de sensibilités de réception spatialement différentes associées à la caractéristique directionnelle y relative respective (8) sont traités, chacun, pour obtenir une quantité de valeurs de réception pondérées,
**caractérisé par le fait que** les quantités de valeurs de réception pondérées appartenant aux différentes caractéristiques directionnelles sont traitées ensemble, et
qu'au moins à partir des quantités des valeurs de réception pondérées traitées ensemble est déterminée l'information relative à la position de l'émetteur (2).
